(19) Europäisches Patentamt / European Patent Office / Office européen des brevets

(11) **EP 1 460 384 B1**

(12) **FASCICULE DE BREVET EUROPEEN**

(45) Date de publication et mention
de la délivrance du brevet:
**11.07.2012 Bulletin 2012/28**

(51) Int Cl.:
***G01C 23/00*** *(2006.01)*    ***G08G 5/04*** *(2006.01)*
***G01S 7/20*** *(2006.01)*

(21) Numéro de dépôt: **04290431.8**

(22) Date de dépôt: **18.02.2004**

(54) **procédé et dispositif pour construire une image de synthèse de l'environnement d'un aéronef et la présenter sur un écran dudit aéronef**

Verfahren und Vorrichtung zur Erstellung eines synthetischen Bildes der Umgebung eines Flugzeuges und dessen Darstellung auf einem Bildschirm dieses Flugzeugs

Method and apparatus for constructing a synthetic image of the environment of an aircraft and displaying the image on a display of this aircraft

(84) Etats contractants désignés:
**AT BE BG CH CY CZ DE DK EE ES FI FR GB GR HU IE IT LI LU MC NL PT RO SE SI SK TR**

(30) Priorité: **07.03.2003 FR 0302861**

(43) Date de publication de la demande:
**22.09.2004 Bulletin 2004/39**

(73) Titulaire: **AIRBUS OPERATIONS (SAS)**
**31060 Toulouse (FR)**

(72) Inventeurs:
- **Morizet, Benoît**
 **31400 Toulouse (FR)**
- **Lecomte, Pierre**
 **31320 Aureville (FR)**
- **Wanner, Jean-Claude**
 **47150 Laussou (FR)**
- **Wanner, Nicole**
 **47150 Laussou (FR)**
- **L'Hote, Sébastien**
 **31000 Toulouse (FR)**
- **Morere, Patrick**
 **31200 Toulouse (FR)**
- **Amade, Vincent**
 **33610 Cestas (FR)**

(74) Mandataire: **Bonnetat, Christian**
**Gevers France**
**23bis, rue de Turin**
**75008 Paris (FR)**

(56) Documents cités:
**EP-A- 1 087 210    US-A- 5 781 146**

## Description

La présente invention concerne un procédé et un dispositif pour afficher des images de synthèse sur un aéronef, en particulier un avion de transport civil. Plus précisément, ledit procédé et ledit dispositif sont destinés à construire une image de synthèse de l'environnement de l'aéronef et à la présenter à au moins un pilote dudit aéronef.

On sait que la navigation et l'exploitation des aéronefs, notamment des avions de transport civils, peuvent engendrer des charges de travail importantes pour les équipages et le contrôle aérien. En particulier, certaines phases ou conditions de vol peuvent être propices à une dispersion plus ou moins importante de l'attention des pilotes. La synthèse complexe des données de pilotage, de navigation et des états des systèmes de l'aéronef peut alors ne pas s'effectuer de manière optimale et complète. La construction d'images mentales fausses de la situation réelle de l'aéronef dans l'espace, notamment en ce qui concerne les marges verticales par rapport au terrain, peut être à l'origine de jugements et de comportements intempestifs ou erronés.

Le document US 5 781 146 décrit, par exemple, une causole combinant radar météo et affichage du relief.

En outre, au cours de l'utilisation de calculateurs de gestion de vol (par exemple de type "FMS" : "Flight Management System"), des difficultés peuvent apparaître dans la programmation et l'analyse du plan de vol confirmé par l'équipage. La conscience de la trajectoire pilotée par les automatismes relativement à l'environnement extérieur n'est pas immédiate. La programmation engendre elle-même une forte charge de travail. Elle peut aussi être erronée, avec une prise de conscience tardive de l'erreur.

Les deux points évoqués précédemment, à savoir d'une part le manque de conscience des marges verticales de l'aéronef et, d'autre part, les difficultés de dialogue et de programmation des calculateurs de gestion de vol, peuvent parfois être à l'origine d'accidents de l'aéronef par contact avec le terrain. Ces deux points peuvent être caractérisés par un manque global de conscience de situation. La conscience de situation est une synthèse de modèles mentaux constamment mis à jour par des activités cognitives et physiques. Les performances des automatismes peuvent aider l'équipage lors d'une situation à risque, mais augmentent rarement la conscience de situation des pilotes. De plus, l'amélioration de la conscience de situation demande généralement un effort mental important. Le secteur de l'aviation civile cherche donc des moyens simples et intuitifs pour aider les pilotes à appréhender instantanément la position de l'aéronef dans son environnement, à l'instant présent et dans les minutes à venir.

La présente invention a pour objet un procédé permettant de construire une image de synthèse qui, lorsqu'elle est présentée à un pilote d'un aéronef, permet d'aider ce dernier à améliorer la conscience qu'il a de la situation de l'aéronef.

A cet effet, ledit procédé est remarquable, selon l'invention, en ce que :

a) on détermine une première droite passant par l'emplacement de l'aéronef et formant un premier angle d'écartement latéral $\alpha$ et un premier angle d'écartement vertical $\beta$ avec la route de l'aéronef ;
b) on détermine un premier point qui est situé sur ladite première droite à l'arrière de l'aéronef à une distance telle que la projection verticale de ce premier point sur le plan horizontal passant par l'emplacement de l'aéronef, est située à une distance prédéterminée L1 dudit emplacement de l'aéronef ;
c) on détermine une ligne de visée passant par ledit premier point et formant un second angle d'écartement latéral va et un second angle d'écartement vertical vb avec une seconde droite passant par ledit premier point et parallèle à ladite route de l'aéronef;
d) on définit un plan de projection qui est orthogonal à ladite ligne de visée ;
e) on construit une image d'au moins une partie de l'environnement au moins à l'avant de l'aéronef, à l'aide d'une projection conique sur ledit plan de projection en tenant compte dudit premier point comme point de référence de la projection ;
f) on délimite latéralement ladite image par deux droites verticales coupant respectivement la ligne d'horizon de l'image en des deuxième et troisième points qui sont tels que, d'une part, l'angle entre la ligne de visée et une troisième droite passant par lesdits premier et deuxième points correspond à un angle prédéterminé et, d'autre part, l'angle entre la ligne de visée et une quatrième droite passant par lesdits premier et troisième points correspond à un angle prédéterminé ;
g) on adapte l'échelle de l'image ainsi délimitée pour faire correspondre le segment de droite qui est formé par lesdits deuxième et troisième points et qui définit la largeur de l'image, à la largeur d'un écran de visualisation sur lequel on souhaite présenter ladite image, et on délimite verticalement cette image en fonction de la hauteur dudit écran de visualisation ; et
h) on présente sur ledit écran de visualisation l'image ainsi construite représentant une image de synthèse.

Ainsi, grâce à l'invention, ledit procédé permet de construire une image de synthèse en trois dimensions pour visualiser la position (ou l'emplacement) de l'aéronef, ainsi que l'environnement dans lequel évolue cet aéronef. Cette image de synthèse est construite selon un point de vue extérieur à l'aéronef. L'affichage (ou la présentation) de cette image sur l'écran de visualisation, qui est par exemple situé dans le poste de pilotage de l'aéronef, permet d'améliorer la conscience qu'a le pilote de la situation effective de l'aéronef.

De façon avantageuse :

- ledit premier angle d'écartement latéral α est compris entre 6° et 15° ; et/ou
- ledit premier angle d'écartement vertical β est compris entre 3° et 10°;et/ou
- ladite distance prédéterminée L1 est comprise entre 3 et 20 kilomètres ; et/ou
- ledit second angle d'écartement latéral va est inférieur ou égal audit premier angle d'écartement latéral α ; et/ou
- ledit second angle d'écartement vertical vb est inférieur ou égal audit premier angle d'écartement vertical β.

En outre, dans un mode de réalisation particulier, ledit écran de visualisation est muni d'une échelle de cap et lesdits angles entre la ligne de visée et lesdits troisième et quatrième droites sont tels que l'écart angulaire sur l'échelle de cap entre lesdits deuxième et troisième points est compris entre 40° et 140°.

Par ailleurs, de façon avantageuse, à l'étape g), on délimite verticalement l'image de sorte que la ligne d'horizon de ladite image est située dans le tiers supérieur dudit écran de visualisation.

En outre, avantageusement, à l'étape e), on construit uniquement une image de l'environnement qui est situé jusqu'à une distance prédéterminée à l'avant de l'aéronef.

Dans un mode de réalisation préféré de l'invention, l'image construite à l'étape e) comporte au moins les éléments suivants :

- un premier symbole représentant l'aéronef et indiquant son emplacement ;
- une représentation illustrant le terrain ;
- un trait vertical de référence entre ledit symbole de l'aéronef et sa projection verticale sur ledit terrain ; et
- un premier tracé représentant la trajectoire future de l'aéronef.

Ainsi, l'image construite permet d'améliorer la conscience du pilote de la situation globale de l'aéronef, notamment vis-à-vis de l'environnement extérieur, et de sa trajectoire future par rapport à cet environnement extérieur.

En outre, avantageusement, l'image construite à l'étape e) comporte de plus :

- un second tracé représentant la projection verticale sur ledit terrain de la trajectoire future de l'aéronef ; et/ou
- une pluralité de traits verticaux entre des points situés sur ledit premier tracé représentant la trajectoire future de l'aéronef et les projections verticales correspondantes. De préférence, au moins l'un desdits traits verticaux comporte une indication d'altitude de sécurité ; et/ou
- une échelle de cap représentée au-dessus de la ligne d'horizon ; et/ou

- un plan de vol ; et/ou
- des informations supplémentaires, par exemple des informations sur le trafic aérien ou la météo.

Par ailleurs, de façon avantageuse, ledit trait vertical de référence comporte une échelle et/ou une indication d'altitude de sécurité.

En outre, avantageusement, ledit premier symbole représentant l'aéronef est représentatif des attitudes de l'aéronef en roulis, tangage et lacet.

Par ailleurs, avantageusement, ladite représentation illustrant le terrain est colorée en fonction de l'écart entre l'altitude de l'aéronef et l'altitude dudit terrain.

En outre, de façon avantageuse, on détecte tout risque de collision de l'aéronef avec le terrain, en calculant la distance entre la trajectoire future de l'aéronef et ledit terrain, et on présente une première indication d'alarme sur ladite image lorsqu'un tel risque de collision est détecté.

De plus, avantageusement, on détecte tout risque d'intersection d'un plan de vol de l'aéronef avec le terrain, en calculant la distance entre une trajectoire correspondant à ce plan de vol de l'aéronef et ledit terrain, et on présente une seconde indication d'alarme sur ladite image lorsqu'un tel risque d'intersection est détecté.

Dans un mode de réalisation particulier, on réalise une rotation de la ligne de visée d'un angle prédéterminé autour de l'aéronef. Ceci permet d'avoir conscience de la situation de l'aéronef par rapport au terrain situé derrière lui ou sur les côtés, comme précisé ci-dessous.

La présente invention concerne également un dispositif pour construire une image de synthèse de l'environnement d'un aéronef et la présenter à au moins un pilote dudit aéronef.

Selon l'invention, ledit dispositif du type comportant :

- des sources d'informations comprenant des informations relatives à l'aéronef et à son environnement ;
- des moyens de traitement d'informations susceptibles de construire une image de synthèse de l'environnement de l'aéronef, à partir d'informations issues desdites sources d'informations ; et
- des moyens d'affichage susceptibles de présenter, sur au moins une partie d'un écran de visualisation, ladite image de synthèse,

est remarquable en ce que lesdits moyens de traitement d'informations sont formés de manière à mettre en oeuvre le procédé spécifié ci-dessus.

Ainsi, ledit dispositif conforme à l'invention fournit une représentation qui montre le terrain, la position de l'aéronef et de sa trajectoire future, ainsi que des alertes éventuelles de risques de collision avec le terrain et de franchissement d'altitudes de sécurité, sous la forme d'une image tridimensionnelle. Cette image tridimensionnelle est directement et intuitivement accessible pour les pilotes, sans effort particulier.

Le dispositif conforme à l'invention, qui permet donc d'aider les pilotes à appréhender instantanément la position de l'aéronef dans son environnement, à l'instant présent et dans les minutes à venir, apporte par conséquent une aide précieuse à la conscience de la situation de l'aéronef relativement au terrain et augmente considérablement le confort et la sécurité de vol.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 à 8 et 11 illustrent différents graphiques permettant de bien mettre en évidence la mise en oeuvre du procédé conforme à l'invention.

Les figures 9 et 10 sont deux vues partiellement arrachées qui montrent deux images construites conformément à la présente invention, qui sont présentées sur un écran de visualisation et qui sont relatives respectivement à deux situations différentes.

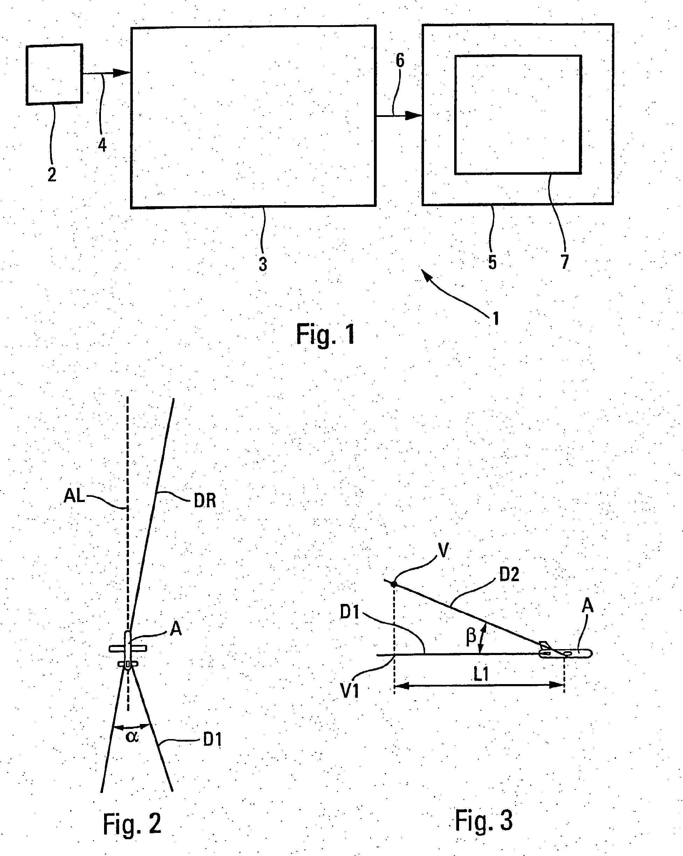

Le dispositif 1 conforme à l'invention et représenté schématiquement sur la figure 1 est destiné à la construction d'une image de synthèse IM de l'environnement d'un aéronef A, en particulier d'un avion de transport civil, et à sa présentation à au moins un pilote dudit aéronef A.

Pour ce faire, ledit dispositif 1 qui est embarqué sur l'aéronef A est du type comportant :

- des sources d'informations 2 comprenant, par exemple, des capteurs, des calculateurs, des systèmes embarqués, ..., qui fournissent des informations relatives à l'aéronef A et à son environnement ;
- des moyens de traitement d'informations 3 reliés par une liaison 4 auxdites sources d'informations 2 et susceptibles de construire une image de synthèse IM de l'environnement de l'aéronef A, à partir d'informations issues desdites sources d'informations 2 ; et
- des moyens d'affichage 5 reliés par une liaison 6 auxdits moyens de traitement d'informations 3 et susceptibles de présenter, sur au moins une partie d'un écran de visualisation 7, ladite image de synthèse IM.

Selon l'invention, lesdits moyens de traitement d'informations 3 mettent en oeuvre un procédé comprenant la suite d'étapes suivantes consistant à :

a/ déterminer une droite D2 passant par l'emplacement de l'aéronef A et formant un angle d'écartement latéral $\alpha$ et un angle d'écartement vertical $\beta$ avec la route DR de l'aéronef A (figures 2 et 3). On entend par emplacement de l'aéronef A sa position spatiale et plus précisément la position spatiale de son centre de gravité.

Pour ce faire, dans une première variante, on détermine une droite D1, située dans un plan horizontal, formant un angle d'écartement latéral $\alpha$ avec la route instantanée DR de l'aéronef A et coupant cette route à l'emplacement courant de l'aéronef A, comme représenté sur la figure 2. Puis, on détermine ladite droite D2, qui est située dans le même plan vertical que la droite D1; qui forme un angle d'écartement vertical $\beta$ avec la droite D1 et qui coupe ladite droite D1 ainsi que ladite route DR à l'emplacement courant de l'aéronef A, comme représenté sur la figure 3. On notera que la route instantanée DR forme un angle généralement non nul avec l'axe longitudinal AL de l'aéronef A sur les figures 2, 4 et 5.

Dans une seconde variante non représentée, on détermine d'abord une droite D1A (non représentée) formant un angle d'écartement vertical $\beta$ avec la route instantanée DR de l'aéronef A, puis on forme ladite droite D2 qui présente un angle d'écartement latéral $\alpha$ avec cette droite D1 A ;

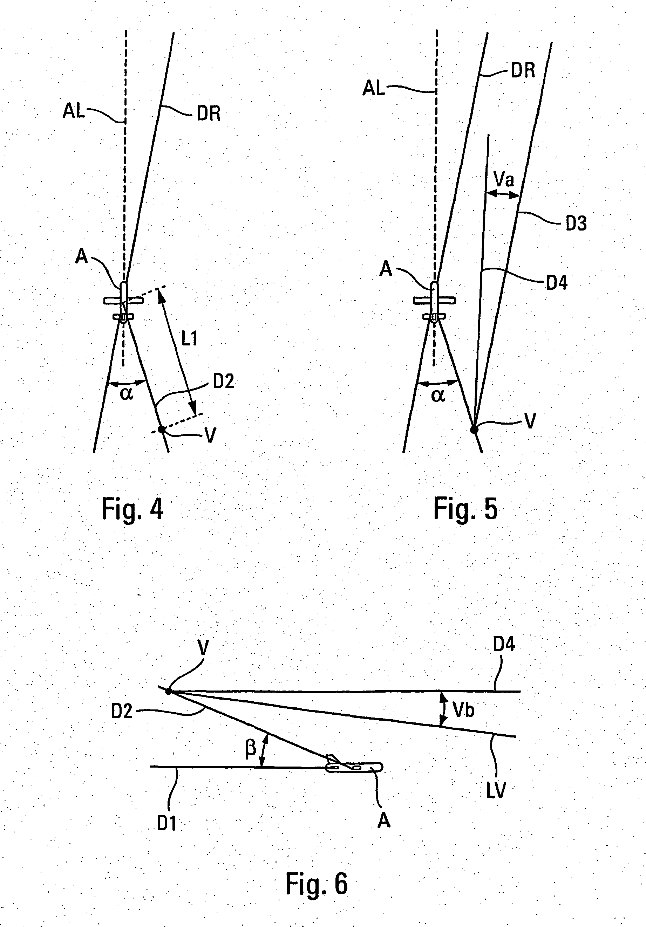

b/ déterminer un point V qui est situé sur ladite droite D2 à l'arrière de l'aéronef A à une distance telle que la projection verticale V1 de ce point V sur le plan horizontal passant par l'emplacement de l'aéronef A, est située à une distance prédéterminée L1 dudit emplacement de l'aéronef A, comme représenté sur les figures 3 et 4 ;

c/ déterminer une ligne de visée LV (figure 6) passant par ledit point V et formant un angle d'écartement latéral va et un angle d'écartement vertical vb avec une droite D3 passant par ledit point V et parallèle à ladite route DR de l'aéronef A.

Pour ce faire, dans une première variante, on détermine une droite D4 qui passe par le point V, qui est située dans un plan horizontal, et qui forme un angle d'écartement latéral va avec la droite D3, comme représenté sur la figure 5. Puis, on détermine la ligne de visée LV, qui est située dans le même plan vertical que la droite D4, qui forme un angle d'écartement vertical vb avec la droite D4 et qui coupe la droite D4 au point V, comme représenté sur la figure 6.

Dans une seconde variante non représentée, on détermine d'abord une droite D4A (non représentée) formant un angle d'écartement vertical vb avec la droite D3, puis la droite LV qui forme un angle d'écartement latéral va avec cette droite D4A ;

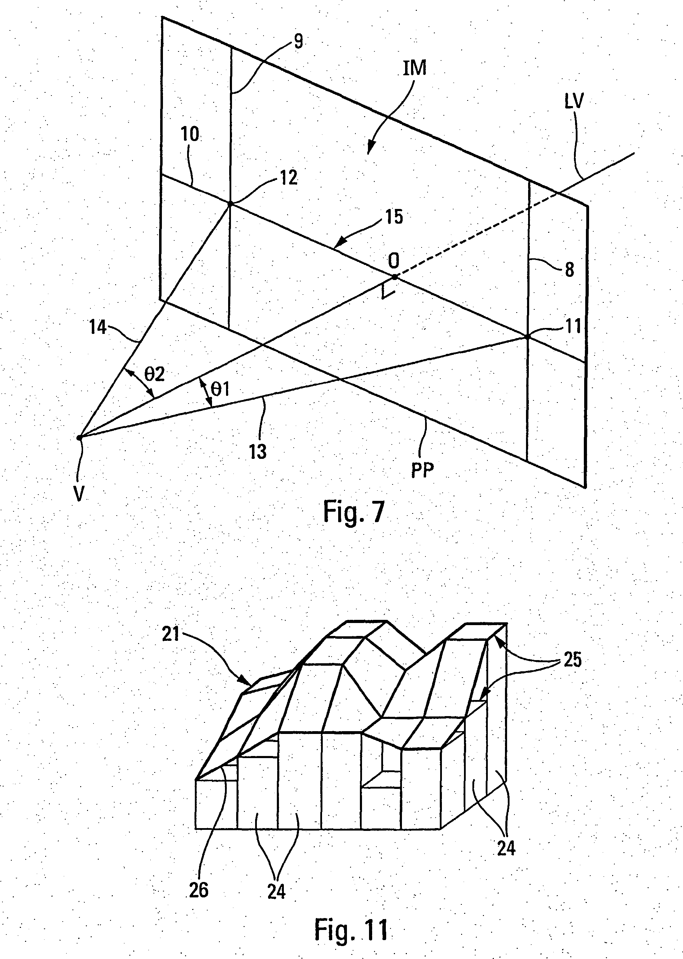

d/ définir un plan de projection PP qui est orthogonal à ladite ligne de visée LV et qui est situé à une distance arbitraire L2 dudit point V. Ladite ligne de visée LV coupe le plan de projection PP en un point O (figure 7) ;

e/ construire une image IM d'au moins une partie de l'environnement au moins à l'avant de l'aéronef A, à l'aide d'une projection conique sur ledit plan de projection PP en tenant compte dudit point V comme point de référence de la projection, comme on le verra plus en détail ci-dessous ;

f/ délimiter latéralement ladite image IM par deux droites verticales 8 et 9 coupant, comme représenté sur la figure 7, respectivement la ligne d'horizon 10 de l'image IM en des points 11 et 12 qui sont tels que, d'une part, l'angle θ1 entre la ligne de visée LV et une droite 13 passant par lesdits points V et 11 correspond à un angle prédéterminé et, d'autre part, l'angle θ2 entre la ligne de visée LV et une droite 14 passant par lesdits points V et 12 correspond à un angle prédéterminé ;

g/ adapter l'échelle de l'image IM ainsi délimitée pour faire correspondre le segment de droite 15 qui est formé par lesdits points 11 et 12 et qui définit la largeur de l'image IM, à la largeur de l'écran de visualisation 7 sur lequel on souhaite présenter cette image IM, et délimiter verticalement cette image IM en fonction de la hauteur dudit écran de visualisation 7. De préférence, la limitation verticale de l'image IM est telle que la ligne d'horizon 10 de cette image IM est située sensiblement au tiers supérieur de l'écran de visualisation 7 ; et

h/ transmettre l'image IM ainsi construite qui représente une image de synthèse auxdits moyens d'affichage 5 pour qu'ils la présentent sur ledit écran de visualisation 7.

Ainsi, lesdits moyens de traitement d'informations 3 permettent de construire une image de synthèse IM en trois dimensions pour visualiser la position (ou l'emplacement) de l'aéronef A, ainsi que l'environnement dans lequel évolue cet aéronef A. Cette image de synthèse IM est construite selon un point de vue (point V) extérieur à l'aéronef A. L'affichage (ou la présentation) de cette image IM sur l'écran de visualisation 7, qui est par exemple situé dans le poste de pilotage de l'aéronef A, permet d'améliorer la conscience qu'a le pilote de la situation effective de l'aéronef A. Cet écran de visualisation 7 peut être un écran spécifique ou un écran existant déjà sur l'aéronef A, tel qu'un écran de navigation usuel de type "ND" ("Navigation Display").

Dans un mode de réalisation préféré de l'invention :

- la valeur de l'angle α (étape a) est comprise dans un intervalle sensiblement égal à [6° ; 15°]. De préférence, l'angle α est sensiblement égal à 9° ou 10° ;
- la valeur de l'angle β (étape a) est comprise dans un intervalle sensiblement égal à [3° ; 10°]. De préférence, l'angle β est sensiblement égal à 5° ou 6°;
- la valeur de la distance L1 (étape b) est comprise dans un intervalle sensiblement égal à [2 Nm ; 10 Nm] (environ [3,7 km ; 18,5 km]), Nm étant le mille nautique, unité internationale de mesure de distance employée en aéronautique et valant 1852 mètres. De préférence, la distance L1 est sensiblement égale à 5 Nm (environ 9,3 kilomètres) ;
- la valeur de l'angle va (étape c) est de préférence comprise dans un intervalle sensiblement égal à [0 ; α]. Lorsque va= 0, la ligne de visée LV est située dans un plan vertical parallèle à la route DR de l'aéronef A. Lorsque va = α, la ligne de visée LV est telle que la représentation de l'aéronef A se situe au centre de l'image IM ; et
- la valeur de l'angle vb (étape c) est de préférence comprise dans un intervalle sensiblement égal à [0 ; β].

On notera que la construction de l'image IM a été représentée sur les figures 2, 4 et 5 dans le cas où le point V est situé légèrement à droite à l'arrière de l'aéronef A. Sans sortir du cadre de la présente invention, on peut bien entendu également construire une image depuis un point V qui est situé légèrement à gauche à l'arrière de l'aéronef A.

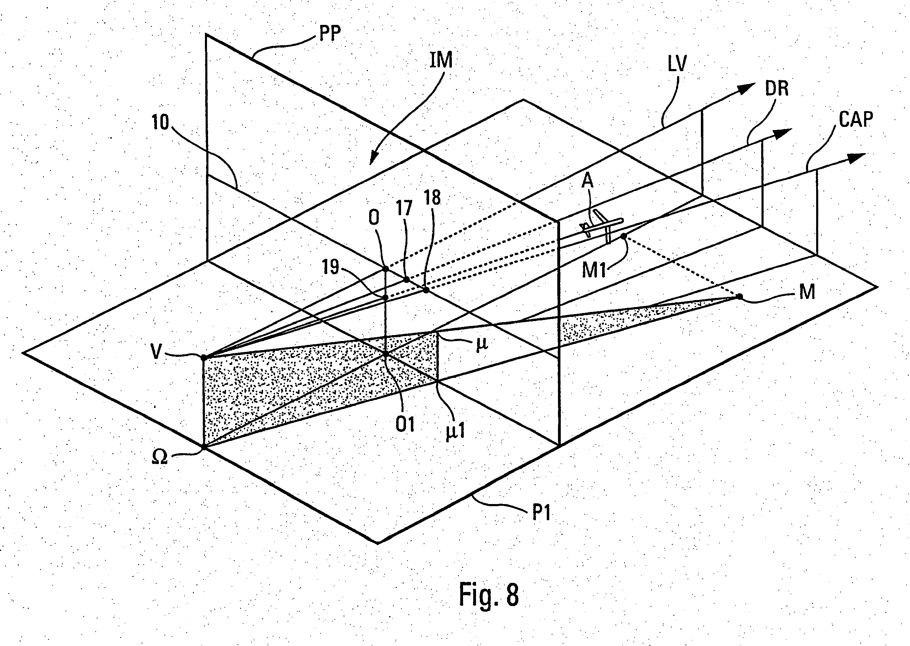

Par ailleurs, la projection utilisée à l'étape e) est une projection conique usuelle. On sait qu'une telle projection conique (ou centrale) est par construction la représentation la plus proche de nos perceptions visuelles. Elle permet notamment de voir une sphère comme un cercle. Une projection conique de l'espace à trois dimensions est une transformation projective qui envoie tous les points de cet espace sur un même plan de projection PP de cet espace. Elle nécessite la donnée d'un point de référence V (équivalent à la position de l'oeil d'un observateur) et d'un plan de projection PP (la vitre de Dürer, l'équivalent de la rétine) [figures 7 et 8]. L'image $\mu$ d'un point M par cette projection conique est définie comme l'intersection de la droite VM (équivalente au rayon de lumière venant du point M arrivant sur l'oeil V) avec le plan de projection PP. Contrairement aux projections affines, la projection conique ne conserve pas le barycentre (donc les rapports de longueurs sur une droite donnée). Elle conserve seulement l'alignement et le birapport. On notera de plus que le point O (point d'intersection de la droite LV avec le plan de projection PP) appartient à une droite correspondant à la représentation de la ligne d'horizon 10 dans le plan de projection PP. Celle-ci correspond à la projection de points situés à l'infini. Selon cette projection conique, deux droites parallèles de l'espace sont représentées comme convergeant vers un même point qui est situé à l'infini, et qui est donc représenté sur cette ligne d'horizon 10.

La représentation de la figure 8 permet de bien mettre en évidence ladite projection conique. Sur cette figure 8, on a représenté :

- le plan de projection PP qui est orthogonal à la ligne de visée LV passant par le point V et coupant ce plan de projection PP au point O ;
- un plan P1 qui est orthogonal audit plan de projection PP ;
- la route DR et le cap CAP de l'aéronef A, qui coupent le plan de projection PP respectivement en des points 17 et 18 qui illustrent donc la route DR et le cap CAP sur l'image IM ;

- un point 19 illustrant la position de l'aéronef A et correspondant au point du plan de projection PP que coupe la droite passant par le point V et l'aéronef A ;
- un point Ω correspondant à la projection du point V sur le plan P1 ; et
- des points M1 et M qui sont situés sur ledit plan P1, les droites ΩM1, ΩM et VM coupant le plan de projection PP respectivement en des points 01, $\mu$1 et $\mu$.

La projection conique permet d'obtenir notamment les équations suivantes :

$$\begin{cases} \dfrac{01\mu1}{M1M} = \dfrac{\Omega 01}{\Omega M1} \\[2ex] \dfrac{\mu\mu1}{V\Omega} = \dfrac{M\mu1}{M\Omega} = \dfrac{M1\,01}{M1\Omega} \end{cases}$$

Dans un mode de réalisation particulier de l'invention, le pilote de l'aéronef A dispose d'une fonction qu'il peut activer (par exemple en appuyant sur une touche non représentée) pour provoquer une rotation de la ligne de visée LV d'un angle prédéterminé autour de l'aéronef A, en augmentant la valeur de l'angle $\alpha$ de la valeur de cet angle prédéterminé, afin d'avoir conscience de la situation de l'aéronef A par rapport au terrain qui est situé derrière l'aéronef A (angle de 180°) ou sur les côtés (angles de $\pm$ 90°). Une telle fonction est particulièrement avantageuse dans les phases d'approche d'un aéroport ou de virage de l'aéronef A. Dans une variante de ce mode de réalisation particulier, on fait tourner la ligne de visée LV d'un angle prédéterminé autour du point V, sans modifier l'angle $\alpha$. Ainsi, pour une valeur dudit angle prédéterminé égale à 180°, il est possible d'afficher une image du terrain situé derrière l'aéronef A, ladite image ne représentant pas l'aéronef.

Par ailleurs, on sait que, sur un écran de navigation de type "ND" ("Navigation Display") d'un aéronef A, dans les modes dits "ARC" ou "ROSE", l'affichage comporte une graduation dite "échelle de cap" qui correspond à tout ou partie d'une graduation de 0 à 360° centrée sur cet aéronef A, la valeur 0 de cette graduation correspondant au Nord. Pour chaque valeur angulaire de l'échelle de cap, on peut définir une droite passant par le centre de gravité de l'aéronef A et formant un angle correspondant à cette valeur angulaire, par rapport à la direction 0° de cette échelle de cap. La représentation de cette droite dans le plan de projection converge (à l'infini) vers un point situé sur la ligne d'horizon. On peut ainsi définir une échelle de cap associée à l'image virtuelle construite dans le plan de projection : cette échelle de cap est constituée d'un ensemble de points sur la ligne d'horizon, ce qui revient à graduer la ligne d'horizon en valeurs angulaires de l'échelle de cap. Pour des raisons d'homogénéité de l'affichage entre un tel écran "ND" et l'image virtuelle IM objet de la présente invention, dans un mode de réalisation préféré, lorsque l'on utilise comme écran de visualisation 7 un écran "ND", on réalise la limitation latérale de l'image virtuelle IM (étape f précédente) de façon à ce que les droites 13 et 14 coupent la ligne d'horizon 10 en des points 11 et 12 qui correspondent, sur une échelle de cap de cette image virtuelle IM; aux valeurs limites de l'échelle de cap affichée sur l'écran "ND". Par exemple, dans de nombreux cas, ces valeurs limites sont égales à $\pm 45°$ de part et d'autre du cap courant de l'aéronef A, soit un écart angulaire de 90° sur l'échelle de cap entre lesdits points 11 et 12.

Plus généralement, selon l'invention, les valeurs des angles 01 et θ2 sont choisies de façon à ce que l'écart angulaire sur l'échelle de cap entre lesdits points 11 et 12 soit compris dans un intervalle sensiblement égal à [40° ; 140°]. De préférence, cet écart angulaire est choisi sensiblement égal à 90°. Dans un mode de réalisation préféré, les valeurs θ1 et θ2 sont choisies sensiblement égales (le point O est alors sensiblement au centre de l'image IM).

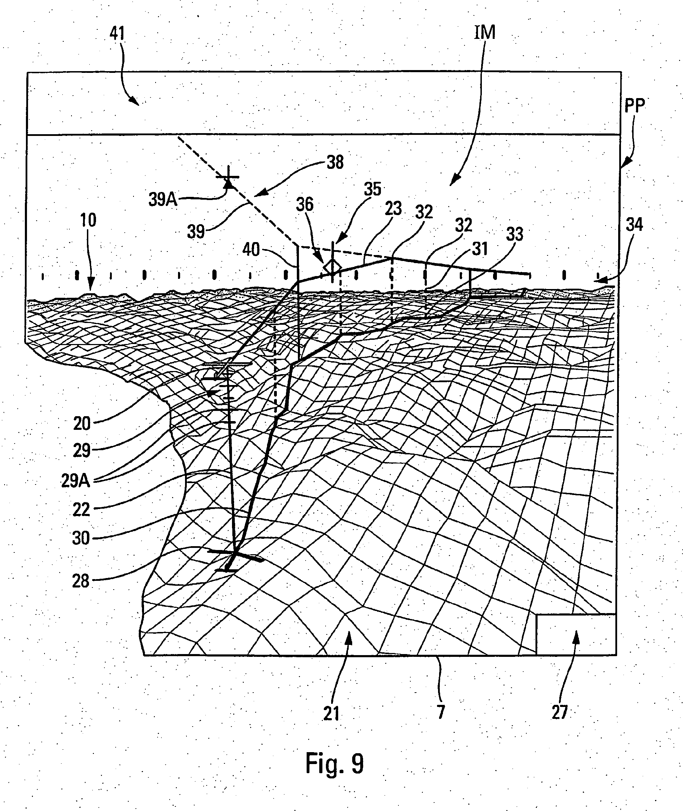

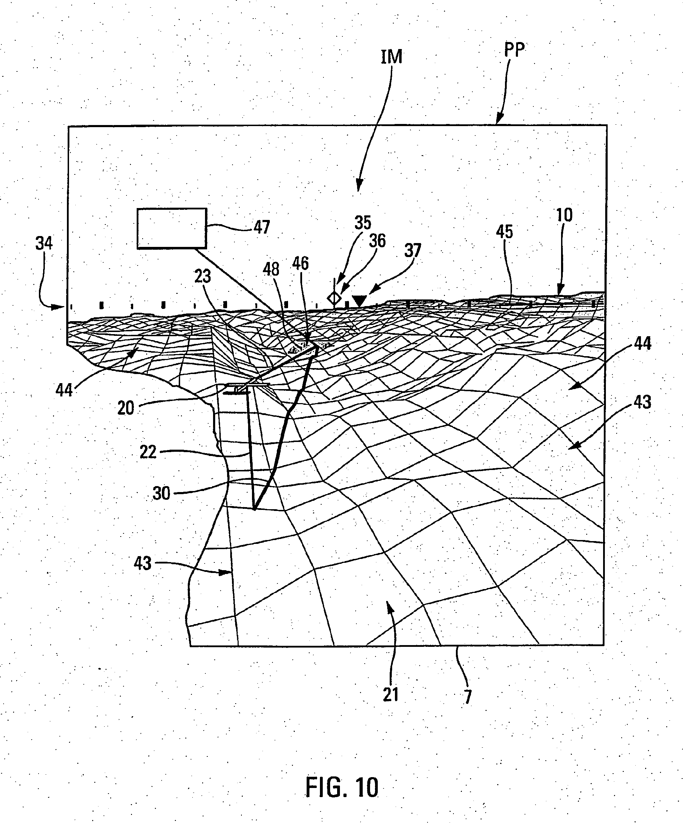

Dans un mode de réalisation préféré de l'invention, l'image IM construite à l'étape e) précitée comporte au moins les éléments suivants, comme représenté sur les figures 9 et 10 :

- un symbole 20 représentant l'aéronef A, situé au point 19 de la figure 8 et indiquant son emplacement ;
- une représentation 21 illustrant le terrain ;
- un trait vertical de référence 22, de préférence en trait plein, entre ledit symbole 20 de l'aéronef A et sa projection verticale sur ledit terrain 21 ; et
- un tracé 23, de préférence en trait plein, représentant la trajectoire future de l'aéronef A.

L'écran de visualisation 7 représenté sur les figures 9 et 10 est partiellement arraché pour faciliter l'écriture des références.

Le symbole 20 est fixe dans l'image IM en 3D et donne aux pilotes une référence permanente et immédiate lors d'un coup d'oeil jeté sur l'écran de visualisation 7. Le terrain 21 est mobile, c'est lui qui se déplace sous le symbole 20, déroulant ainsi le relief autour de la maquette de l'aéronef A. Afin de favoriser une compréhension simple de l'image IM, le symbole 20 est représentatif des attitudes réelles de l'aéronef A en roulis, tangage et lacet. Ces informations sont qualitativement reportées sur ce symbole 20 qui s'incline suivant les trois axes.

Par ailleurs, la construction de la représentation 21 illustrant le terrain se fait à partir d'une base de données embarquée, faisant partie desdites sources d'information 2, et construite par exemple sur le référentiel terrestre "WGS84" (compatible GPS). Dans un mode de réalisation préféré, cette représentation 21 est construite autour de cubes élémentaires 24 de dimensions variables représentant une portion de terrain, comme illustré sur la figure 11, les extrémités supérieures 25 desdits cubes élémentaires 24 étant reliées entre elles par une surface 26 qui forme ladite représentation 21.

Les précisions requises de cette représentation 21 dépendent des zones survolées. Autour des aéroports, lors de phases de vol critiques (montée initiale et approche finale notamment), la résolution doit être affinée pour obtenir un maillage de terrain optimal constitué, par exemple, de carrés (surfaces d'extrémité 25) de 15"x15". En vol de croisière, des carrés élargis de 3' x 3' suffisent. Une résolution constante est également possible afin d'afficher une précision fine, étendue sur l'ensemble du relief et sans différence. Ces valeurs sont définies en cohérence avec les résolutions de bases de données existantes, qui sont embarquées sur l'aéronef A. Pour répondre aux objectifs de sécurité du dispositif 1, le relief numérique construit doit englober avec un niveau de confiance déterminé l'ensemble du relief réel : les cubes élémentaires 24 doivent donc recouvrir entièrement le terrain à visualiser.

Ainsi, la représentation 21 illustrant le terrain est une représentation réaliste et intuitive, qui favorise une prise de conscience immédiate de la géographie réelle. Cette opération de lissage du terrain assure une sécurité optimale et permet une modélisation fidèle du relief extérieur.

Dans un mode de réalisation préféré, l'image IM construite à l'étape e) précitée comporte aussi une grille associée à la représentation 21 du terrain. Cette grille correspond à la projection verticale des arêtes des extrémités supérieures 25 des cubes élémentaires 24 sur la surface 26 formant ladite représentation 21. Un tel mode de représentation permet de bien appréhender qualitativement la notion de distance. Il permet aussi une meilleure perception visuelle de l'effet de perspective.

Bien entendu, il est également possible, en variante, de représenter uniquement lesdits cubes élémentaires 24 sans réaliser de lissage.

On notera que ladite représentation 21 illustrant le terrain peut inclure des obstacles créés par l'homme (tours, ponts, ...). Ces obstacles peuvent être intégrés dans la base de données embarquée précitée ou dans une base de données spécifique.

Dans un mode de réalisation préféré, l'altitude du terrain prise en compte dans la représentation 21 est multipliée par un coefficient $k$ dont la valeur est comprise dans un intervalle sensiblement égal à [1,5 ; 2,5]. De préférence, le coefficient $k$ est sensiblement égal à 2. L'application d'un tel coefficient multiplicateur permet d'amplifier les altitudes et par suite d'améliorer la perception des reliefs.

Dans un mode de réalisation préféré, les points situés devant l'aéronef A à une distance supérieure à une distance prédéterminée L3 ne sont pas représentés sur l'image virtuelle IM construite dans le plan de projection PP. Ils peuvent être remplacés sur cette image par une coloration uniforme pour l'ensemble desdits points. Cette coloration uniforme peut par exemple être grise ou blanche, de façon à être perçue visuellement comme de la brume. De façon préférée, la valeur L3 est choisie égale à la distance maximale utilisée sur une vue en plan, représentée sur un écran de navigation de type "ND", c'est-à-dire la zone située devant l'aéronef A qui est affichée sur cet écran "ND", L3 étant en outre limitée à une valeur de 150 kilomètres (environ 80 Nm) au-delà de laquelle la perspective ne permet plus de distinguer les détails. Pour faciliter la compréhension de la perspective, il peut être utile, d'une part, d'afficher sur l'écran 7, par exemple dans un rectangle 27 représenté sur la figure 9, la valeur de la distance maximale choisie et de modifier la taille du symbole 20 qui devient de plus en plus grand lorsque ladite distance maximale diminue.

Par ailleurs, ledit trait vertical 22 représenté entre le symbole 20 de l'aéronef A et sa projection verticale sur le terrain 21 comporte une échelle 29 constituée de repères horizontaux 29A placés sur ce trait vertical 22 de façon à indiquer des distances prédéterminées sous l'aéronef A. Par exemple, ces repères 29A sont espacés entre eux d'une distance correspondant à une valeur de 500 pieds (environ 150 mètres) et le nombre de repères 29A est limité à cinq de façon à ne pas surcharger l'affichage.

Dans un mode de réalisation particulier, ledit trait vertical de référence 22 comporte également une indication d'altitude de sécurité, non représentée.

Par ailleurs, un symbole 28 est représenté à l'intersection dudit trait vertical 22 et du terrain 21 afin de permettre une visualisation de la projection verticale de l'aéronef A sur le terrain 21. Ce symbole 28 peut par exemple être gris et ressembler à une "ombre" de l'aéronef A. Le pilote repère ainsi clairement une déviation latérale, en particulier en cas de projection simultanée du plan de vol.

On notera en outre que la représentation du tracé 23 de la trajectoire future est nécessaire pour permettre à l'équipage d'anticiper les situations dangereuses. La présentation de cette trajectoire participe à l'amélioration de la conscience de situation du pilote. On appelle trajectoire future la prédiction de la trajectoire réellement suivie par l'aéronef A. Bien entendu, la détermination de la trajectoire future 23 dépend du mode de pilotage utilisé sur l'aéronef A.

En mode manuel, la trajectoire 23 représentée est une droite correspondant à la trajectoire instantanée de l'aéronef A. La longueur représentée de cette trajectoire future 23 correspond à une durée de vol sur une courte période (car on ne peut pas prédire les actions futures du pilote) comprise par exemple entre 30 secondes et 3 minutes. Dans le cas particulier où l'aéronef A effectue un virage permanent, la trajectoire future 23 peut correspondre à une extrapolation de ce virage permanent pendant une durée prédéterminée.

En mode sélecté (c'est-à-dire lorsque le pilote automatique de l'aéronef A est commandé par le pilote, par une sélection de cap, d'altitude et/ou de vitesse), la longueur représentée de cette trajectoire future 23, calculée en fonction des paramètres fournis au pilote automatique, correspond à une durée de vol sur une période de moyen terme, comprise par exemple entre 3 minutes et 10 minutes.

En mode managé (c'est-à-dire lorsque le pilote automatique est commandé par un calculateur de gestion de vol de type "FMS" : "Flight Management System"), la longueur représentée de cette trajectoire future 23 correspond à une durée de vol sur une période de moyen terme comprise par exemple entre 3 minutes et 10 minutes. Dans ce cas, la trajectoire représentée est donc celle calculée par ledit calculateur "FMS".

On notera que l'on peut avoir un mixage des modes managé et sélecté selon que l'on considère le guidage latéral ou le guidage vertical de l'aéronef A. Par exemple, on peut avoir un mode sélecté pour le guidage vertical et un mode managé pour le guidage latéral.

Par ailleurs, il convient de noter que les représentations de la trajectoire future et de sa projection verticale sur le terrain peuvent être réalisées de façon à être représentatives du mode de pilotage (manuel, sélecté, managé ou mixage de sélecté et managé), notamment selon la couleur, l'épaisseur ou le type (continu ou pointillé) de trait utilisé. Par exemple, on peut prévoir un trait continu jaune pour la trajectoire future en mode manuel, un trait continu bleu pour sa projection verticale sur le terrain, un trait continu vert pour la trajectoire future en mode sélecté, un trait pointillé vert pour la trajectoire future en mode managé, ...

Par ailleurs, l'image IM construite à l'étape e) précitée comporte de plus, comme représenté sur la figure 9 :

- un tracé 30 représentant la projection verticale sur ledit terrain 21 de la trajectoire future 23 de l'aéronef A ;
- une pluralité de traits verticaux 31 entre des points 32 situés sur ledit tracé 23 représentant la trajectoire future de l'aéronef A et les projections verticales 33 correspondantes de ces points 32 sur ledit terrain 21. De préférence, lesdits points 32 correspondent à la position prévue de l'aéronef A à différents intervalles de temps ou de distance, par exemple chaque minute au cours des cinq prochaines minutes. De plus, au moins l'un desdits traits verticaux 31 comporte une indication d'altitude de sécurité.

Dans un mode de réalisation non représenté, une altitude de sécurité est représentée sur un trait vertical 31 sous forme d'une coloration spécifique, par exemple magenta, de la partie dudit trait qui est située sous cette altitude de sécurité. Dans le cas où l'altitude de l'aéronef A (respectivement d'un point 32 situé sur la trajectoire future 23) est inférieure à cette altitude de sécurité, ce trait vertical 31 est prolongé vers le haut jusqu'à une altitude correspondant à cette altitude de sécurité. Le symbole 20 de l'aéronef A (respectivement un point 32 de la trajectoire future 23) se trouve alors sous la partie supérieure de la représentation de l'altitude de sécurité. Cela constitue un repère visuel simple et immédiat d'une situation potentiellement dangereuse. Cette information peut aussi être représentée sous forme numérique.

Par ailleurs, l'image IM comporte également une échelle de cap 34 représentée au-dessus de la ligne d'horizon 10.

Outre l'échelle de cap 34 proprement dite, des symboles supplémentaires peuvent être disposés sur l'image IM, sur ou à proximité immédiate de ladite échelle de cap 34. Un premier symbole 35, constitué par exemple d'un repère vertical jaune, peut indiquer le cap courant (projection de l'axe longitudinal AL de l'aéronef A sur l'échelle de cap 34). Un second symbole 36, constitué par exemple d'un losange vert et situé au point 17 de la figure 8, peut indiquer la route courante DR de l'aéronef A. Un troisième symbole 37, constitué par exemple d'un triangle de couleur cyan, peut indiquer le cap ou la route choisi par le pilote (dans le mode sélecté),

Par ailleurs, l'image IM construite à l'étape e) comporte de plus un plan de vol 38. Le plan de vol 38 est affiché sur la totalité de l'image IM, à la demande du pilote. Le plan de vol 38 correspond à la trajectoire idéale programmée par exemple par le pilote dans le calculateur de gestion de vol. Ledit plan de vol 38 est artificiellement scindé en différentes sous-parties. Dans un mode de réalisation préféré, le plan de vol 38 comporte :

- une trajectoire 39 dans l'espace, représentée par exemple en traits interrompus et accompagnée d'un symbole 39A pour préciser la position de l'aéronef A par rapport à cette trajectoire 39 dans l'espace;
- une projection au sol (non représentée) de cette trajectoire 39 ; et
- des références verticales (points de route visualisés sous la forme de traits verticaux 40 surmontés, par exemple, d'un losange vert ou blanc).

Par ailleurs, l'image IM construite à l'étape e) comporte de plus des informations complémentaires, qui sont par exemple affichées sur un bandeau 41 prévu sur l'écran de visualisation 7 au-dessus de la représentation en 3D. Ces informations complémentaires peuvent notamment correspondre au report d'informations habituellement affichées sur un écran "ND", telles que le vent (direction et force), la vitesse de l'aéronef, le prochain point de route, ...

Dans un mode de réalisation préféré représenté sur la figure 10, le terrain 21 est coloré en fonction de la marge d'altitude (ou écart) entre l'altitude courante de l'aéronef A et l'altitude dudit terrain 21. Ainsi, le terrain 21 est représenté avec une couleur neutre 43, lorsque la valeur de son altitude est inférieure à un première valeur prédéterminée A1 relativement à l'altitude courante de l'aéronef A. Il est représenté avec une première couleur d'alarme 44, lorsque la valeur de son altitude est comprise entre ladite première valeur A1 et une seconde valeur prédéterminée A2, relativement à l'altitude de l'aéronef A, et il est représenté avec une seconde couleur d'alarme 45 lorsque la valeur de son altitude est supérieure à ladite seconde valeur A2. A titre d'exemple non limitatif, on peut indiquer les valeurs préférées suivantes : A1 est égale à -500 pieds [soit 500 pieds (ou environ 150 mètres) en dessous de l'altitude courante de l'aéronef A] et A2 est égale à + 2000 pieds [soit 2000 pieds (environ 600 mètres) au-dessus de l'altitude courante de l'aéronef A]. De plus, à titre d'illustration, ladite couleur neutre 43 correspond au vert, ladite première couleur d'alarme 44 correspond au jaune et ladite seconde couleur d'alarme 45 correspond au rouge.

De façon avantageuse, lorsque l'aéronef A effectue une descente rapide [par exemple avec une vitesse verticale négative de valeur absolue supérieure à 1000 pieds par minute (environ 300 mètres par minute)], afin de mieux anticiper l'altitude de cet aéronef A lorsqu'il survolera le relief, on remplace son altitude courante mentionnée dans le procédé indiqué ci-dessus par une altitude calculée correspondant à l'altitude prévue de l'aéronef A (selon ses conditions de descente) au bout d'une durée prédéterminée par rapport à l'instant courant, par exemple sensiblement égale à 30 secondes.

De façon avantageuse, la distance entre la trajectoire future 23 et le terrain 21 est calculée et analysée afin de détecter un risque de collision de l'aéronef A avec ledit terrain 21, en prenant en compte une marge de sécurité. S'il existe une zone de conflit potentiel, une alarme est signalée. Par exemple, ladite zone de conflit potentiel 46 est colorée de manière alertante (couleur 48). L'affichage de cette zone peut aussi clignoter et sa fréquence de clignotement peut être d'autant plus élevée que la zone de conflit est proche de l'aéronef A.

Dans un mode de réalisation préféré de l'invention, les couleurs 43, 44, 45 et 48 choisies pour la représentation du terrain 21 sont homogènes avec celles utilisées par un système usuel d'évitement de terrain, embarqué sur l'aéronef A.

De préférence, il est mis en place une enveloppe de protection (virtuelle) autour de l'aéronef A et de sa trajectoire future 23. Cette enveloppe de protection permet de détecter toute intrusion ou rapprochement du terrain avec une certaine marge autour de la position de l'aéronef A et de sa trajectoire future 23. Cette marge est constituée d'une marge fixe forfaitaire et d'une marge prenant en compte l'incertitude des instruments, des automatismes et de la base de données relative au terrain. On garantit ainsi que l'aéronef A se trouvera dans l'enveloppe dans les minutes à venir, et ceci avec une certaine probabilité. De cette probabilité et du choix de marges forfaitaires sécuritaires découlent les dimensions verticales et latérales de l'enveloppe en accord avec les objectifs de sécurité de la fonction. L'enveloppe de protection peut aussi être affinée en fonction de la phase de vol, pour éviter des alarmes intempestives et en fonction des précisions de positionnement de l'aéronef A. Toute zone entrant dans cette enveloppe est colorée de manière alertante et un clignotement peut lui être associé.

Par ailleurs, lorsqu'une zone menaçante 46 est détectée, une étiquette d'alarme 47, présentant le temps avant impact, est affichée, comme représenté sur la figure 10 (et ceci même lorsque cette zone de conflit est située en dehors de la région visible sur l'écran 7). Cette information de compte à rebours vient donc en complément de la coloration du terrain menaçant.

De préférence, la détection d'un risque de collision avec le terrain est inhibée en phase d'approche finale en vue de l'atterrissage afin de ne pas engendrer d'alarmes intempestives.

Dans un mode de réalisation particulier de l'invention, outre la détection d'un risque de collision de la trajectoire future 23 avec le terrain, on réalise également la détection d'un risque d'intersection de la trajectoire 39 correspondant au plan de vol 38 de l'aéronef A, avec ledit terrain.

Le dispositif 1 conforme à l'invention, qui permet d'aider les pilotes à appréhender instantanément la position de l'aéronef A dans son environnement, à l'instant présent et dans les minutes à venir, apporte donc une aide précieuse à la conscience de la situation de l'aéronef relativement au terrain et augmente considérablement le confort et la sécurité de vol. En effet, ledit dispositif 1 permet de présenter aux pilotes une information intuitive et instinctive, ne demandant aucun effort mental pour être traité. Le support d'informations utilisé offre une vision synthétique et immédiate. La représentation 3D engendrée améliore la conscience de situation globale du pilote vis-à-vis:

- de l'environnement extérieur ;
- de la trajectoire future 23 de l'aéronef A par rapport à l'environnement (terrain 21) et au plan de vol 38 prévu ; et
- éventuellement des trafics avoisinants et/ou des phénomènes météorologiques.

**Revendications**

1. Procédé pour construire une image de synthèse (IM) de l'environnement d'un aéronef (A) est la présenter à au moins un pilote dudit aéronef (A),
**caractérisé en ce que** :

a) on détermine une première droite (D2) passant par l'emplacement de l'aéronef (A) et formant un premier angle d'écartement latéral α et un premier angle d'écartement vertical β avec la route (DR) de l'aéronef (A) ;
b) on détermine un premier point (V) qui est situé sur ladite première droite (D2) à l'arrière de l'aéronef (A) à une distance telle que la projection verticale (V1) de ce premier point (V) sur le plan horizontal passant par l'emplacement de l'aéronef (A), est située à une distance prédéterminée L1 dudit emplacement de l'aéronef (A) ;

c) on détermine une ligne de visée (LV) passant par ledit premier point (V) et formant un second angle d'écartement latéral va et un second angle d'écartement vertical vb avec une seconde droite (D3) passant par ledit premier point (V) et parallèle à ladite route (DR) de l'aéronef (A) ;

d) on définit un plan de projection (PP) qui est orthogonal à ladite ligne de visée (LV) ;

e) on construit une image (IM) d'au moins une partie de l'environnement au moins à l'avant de l'aéronef (A), à l'aide d'une projection conique sur ledit plan de projection (PP) en tenant compte dudit premier point (V) comme point de référence de la projection;

f) on délimite latéralement ladite image (IM) par deux droites verticales (8, 9) coupant respectivement la ligne d'horizon (10) de l'image (IM) en des deuxième et troisième points (11, 12) qui sont tels que, d'une part, l'angle ($\theta$1) entre la ligne de visée (LV) et une troisième droite (13) passant par lesdits premier et deuxième points (V, 11) correspond a un angle prédéterminé et, d'autre part, l'angle ($\theta$2) entre la ligne de visée (LV) et une quatrième droite (14) passant par lesdits premier et troisième points (V, 12) correspond à un angle prédéterminé ;

g) on adapte l'échelle de l'image (IM) ainsi délimitée pour faire correspondre le segment de droite (15) qui est formé par lesdits deuxième et troisième points (11, 12) et qui définit la largeur de l'image (IM), à la largeur d'un écran de visualisation (7) sur lequel on souhaite présenter ladite image (IM), et on délimite verticalement cette image (IM) en fonction de la hauteur dudit écran de visualisation (7) ; et

h) on présente sur ledit écran de visualisation (7) l'image (IM) ainsi construite représentant une image de synthèse.

**2.** Procédé selon la revendication 1,
**caractérisé en ce que** ledit premier angle d'écartement latéral $\alpha$ est compris entre 6° et 15°.

**3.** Procédé selon l'une des revendications 1 et 2,
**caractérisé en ce que** ledit premier angle d'écartement vertical $\beta$ est compris entre 3° et 10°.

**4.** Procédé selon l'une quelconque des revendications 1 à 3,
**caractérisé en ce que** ladite distance prédéterminée L1 est comprise entre 3 et 20 kilomètres.

**5.** Procédé selon l'une quelconque des revendications 1 à 4,
**caractérisé en ce que** ledit second angle d'écartement latéral va est inférieur ou égal audit premier angle d'écartement latéral $\alpha$.

**6.** Procédé selon l'une quelconque des revendications 1 à 5,
**caractérisé en ce que** ledit second angle d'écartement vertical vb est inférieur ou égal audit premier angle d'écartement vertical $\beta$.

**7.** Procédé selon l'une quelconque des revendications précédentes,
**caractérisé en ce que** ledit écran de visualisation (7) est muni d'une échelle de cap (34) et lesdites angles ($\theta$1, $\theta$2) entre, d'une part, la ligne de visée (LV) et, d'autre part, lesdits troisième et quatrième droites (13, 14) sont tels que l'écart angulaire sur l'échelle de cap (34) entre lesdits deuxième et troisième points (11, 12) est compris entre 40° et 140°.

**8.** Procédé selon l'une quelconque des revendications précédentes,
**caractérisé en ce qu'**à l'étape g), on délimite verticalement l'image (IM) de sorte que la ligne d'horizon (10) de ladite image (IM) est située dans le tiers supérieur dudit écran de visualisation (7).

**9.** Procédé selon l'une quelconque des revendications précédentes,
**caractérisé en ce qu'**à l'étape e), on construit uniquement une image de l'environnement qui est situé jusqu'à une distance prédéterminée à l'avant de l'aéronef (A).

**10.** Procédé selon l'une quelconque des revendications précédentes,
**caractérisé en ce que** l'image (IM) construite à l'étape e) comporte au moins les éléments suivants :

- un premier symbole (20) représentant l'aéronef (A) et indiquant son emplacement ;
- une représentation (21) illustrant le terrain ;
- un trait vertical de référence (22) entre ledit symbole (20) de l'aéronef (A) et sa projection verticale (28) sur ledit terrain (21) ; et
- un premier tracé (23) représentant la trajectoire future de l'aéronef (A).

**11.** Procédé selon la revendication 10,
**caractérisé en ce que** ledit premier symbole (20) représentant l'aéronèf (A) est représentatif des attitudes de l'aéronef (A) en roulis, tangage et lacet.

**12.** Procédé selon l'une des revendications 10 et 11,
**caractérisé en ce que en ce que** l'image (IM) construite à l'étape e) comporte de plus un second tracé (30) représentant la projection verticale sur ledit terrain (21) de la trajectoire future (23) de l'aéronef (A).

**13.** Procédé selon l'une des revendications 10 à 12,
**caractérisé en ce que** l'image (IM) construite à l'étape e) comporte de plus une pluralité de traits verticaux (31) entre des points (32) situés sur ledit premier tracé (23) représentant la trajectoire future de l'aéronef (A) et les projections verticales correspondantes (33) de ces points (32) sur ledit terrain (21).

**14.** Procédé selon la revendication 13, **caractérisé en ce qu'**au moins l'un desdits traits verticaux (31) comporte une indication d'altitude de sécurité.

**15.** Procédé selon l'une quelconque des revendications 10 à 14, **caractérisé en ce que** l'image (IM) construite à l'étape e) comporte de plus un second symbole (28) situé à l'intersection dudit trait vertical de référence (22) et de ladite représentation (21) illustrant le terrain.

**16.** Procédé selon l'une quelconque des revendications 10 à 15, **caractérisé en ce que** ledit trait vertical de référence (22) comporte une échelle (29).

**17.** Procédé selon l'une quelconque des revendications 10 à 16, **caractérisé en ce que** ledit trait vertical de référence (22) comporte une indication d'altitude de sécurité.

**18.** Procédé selon l'une quelconque des revendications 10 à 17, **caractérisé en ce que** l'image (IM) construite à l'étape e) comporte de plus une échelle de cap (34) représentée au-dessus de la ligne d'horizon (10).

**19.** Procédé selon l'une quelconque des revendications 10 à 18, **caractérisé en ce que** l'image (IM) construite à l'étape e) comporte de plus un plan dé vol (38).

**20.** Procédé selon l'une quelconque des revendications 10 à 19, **caractérisé en ce que** l'image (IM) construite à l'étape e) comporte de plus des informations supplémentaires (41, 27).

**21.** Procédé selon l'une quelconque des revendications 10 à 20, **caractérisé en ce que** ladite représentation (21) illustrant le terrain est colorée en fonction de l'écart entre l'altitude de l'aéronef (A) et l'altitude dudit terrain (21).

**22.** Procédé selon l'une quelconque des revendications 10 à 21, **caractérisé en ce que** l'image (IM) construite à l'étape e) comporte de plus une grille qui est associée à la représentation (21) du terrain et qui correspond à la projection verticale des arêtes des extrémités supérieures (25) de cubes élémentaires (24) sur une surface (26) formant ladite représentation (21).

**23.** Procédé selon l'une quelconque des revendications 10 à 22, **caractérisé en ce que** l'on détecte tout risque de collision de l'aéronef (A) avec le terrain (21), en calculant la distance entre la trajectoire future (23) de l'aéronef. (A) et ledit terrain (21), et on présente une première indication d'alarme (45, 47) sur ladite image (IM) lorsqu'un tel risque de collision est détecté.

**24.** Procédé selon l'une quelconque des revendications 10 à 23, **caractérisé en ce que** l'on détecte tout risque d'intersection d'un plan de vol de l'aéronef (A) avec le terrain (21), en calculant la distance entre une trajectoire (39) correspondant à ce plan de vol (38) de l'aéronef (A) et le dit terrain (21), et on présente une seconde indication d'alarme sur ladite image (IM) lorsqu'un tel risque d'intersection est détecté.

**25.** Procédé selon l'une quelconque des revendications 10 à 24, **caractérisé en ce que** l'on réalise une rotation de la ligne de visée (LV) d'un angle prédéterminé autour de l'aéronef (A).

**26.** Dispositif pour construire une image de synthèse de l'environnement d'un aéronef (A) et la présenter à au moins un pilote dudit aéronef (A), ledit dispositif (1) comportant :

- des sources d'informations (2) comprenant des informations relatives à l'aéronef (A) et à son environnement ;
- des moyens de traitement d'informations (3) susceptibles de construire une image de synthèse (IM) de l'environnement de l'aéronef (A) à partir d'informations issues desdites sources d'informations (2) ; et
- des moyens d'affichage (5) susceptibles de présenter, sur au moins une partie d'un écran de visualisation (7), ladite image de synthèse (IM);

**caractérisé en ce que** lesdits moyens de traitement d'informations (3) sont formés de manière à mettre en oeuvre le procédé spécifié sous l'une quelconque des revendications 1 à 25.

**Claims**

**1.** A process for constructing a synthetic image (IM) of the environment of an aircraft (A) and presenting it to at least one pilot of said aircraft (A), **characterized in that**:

a) a first straight line (D2) passing through the location of the aircraft (A) and forming a first angle of lateral separation on and a first angle of vertical separation β with the course (DR) of the aircraft (A) is determined;

b) a first point (V) is determined, said point being situated on said first straight line (D2) to the rear of the aircraft (A) at a distance such that the vertical projection (V1) of this first point (V) onto the horizontal plane passing through the location of the aircraft (A), is situated at a predetermined distance L1 from said location of the aircraft (A);

c) a line of aim (LV) passing through said first point (V) and forming a second angle of lateral separation va and a second angle of vertical separation vb with a second straight line (D3) passing through said first point (V) and parallel to said course (DR) of the aircraft (A) is determined;

d) a plane of projection (PP) which is orthogonal to said line of aim (LV) is defined;

e) an image (IM) is constructed of at least a part of the environment at least in front of the aircraft (A), with the aid of a conical projection onto said plane of projection (PP) while taking account of said first point (V) as reference point of the projection;

f) said image (IM) is delimited laterally by two vertical straight lines (8, 9) respectively cutting the horizon line (10) of the image (IM) at second and third points (11, 12) which are such that, on the one hand, the angle (θ1) between the line of aim (LV) and a third straight line (13) passing through said first and second points (V, 11) corresponds to a predetermined angle and, on the other hand, the angle (θ2) between the line of aim (LV) and a fourth straight line (14) passing through said first and third points (V, 12) corresponds to a predetermined angle;

g) the scale of the image (IM) thus delimited is adapted so as to match the straight line segment (15) which is formed by said second and third points (11, 12) and which defines the width of the image (IM), to the width of a display screen (7) on which one wishes to present said image (IM), and this image (IM) is delimited vertically as a function of the height of said display screen (7); and

h) the image (IM) thus constructed representing a synthetic image is presented on said display screen (7).

2. The process as claimed in claim 1, **characterized in that** said first angle of lateral separation α lies between 6° and 15°.

3. The process as claimed in one of claims 1 and 2, **characterized in that** said first angle of vertical separation β lies between 3° and 10°.

4. The process as claimed in any one of claims 1 to 3, **characterized in that** said predetermined distance L1 lies between 3 and 20 kilometers.

5. The process as claimed in any one of claims 1 to 4, **characterized in that** said second angle of lateral separation va is less than or equal to said first angle of lateral separation α.

6. The process as claimed in any one of claims 1 to 5, **characterized in that** said second angle of vertical separation vb is less than or equal to said first angle of vertical separation β.

7. The process as claimed in any one of the preceding claims,
**characterized in that** said display screen (7) is furnished with a heading scale (34) and said angles (θ1, θ2) between, on the one hand, the line of aim (LV) and, on the other hand, said third and fourth straight lines (13, 14) are such that the angular discrepancy on the heading scale (34) between said second and third points (11, 12) lies between 40° and 140°.

8. The process as claimed in any one of the preceding claims,
**characterized in that** in step g), the image (IM) is delimited vertically in such a way that the horizon line (10) of said image (IM) is situated in the upper third of said display screen (7).

9. The process as claimed in any one of the preceding claims,
**characterized in that** in step e), only an image of the environment which is situated up to a predetermined distance in front of the aircraft (A) is constructed.

10. The process as claimed in any one of the preceding claims,
**characterized in that** the image (IM) constructed in step e) comprises at least the following elements:

    - a first symbol (20) representing the aircraft (A) and indicating its location;
    - a representation (21) illustrating the terrain;
    - a vertical reference stroke (22) between said symbol (20) of the aircraft (A) and its vertical projection (28) on said terrain (21); and
    - a first plot (23) representing the future trajectory of the aircraft (A).

11. The process as claimed in claim 10, **characterized in that** said first symbol (20) representing the aircraft (A) is representative of the attitudes of the aircraft (A) in roll, pitch and yaw.

12. The process as claimed in any of claims 10 and 11, **characterized in that** the image (IM) constructed in step e) furthermore comprises a second plot (30) representing the vertical projection onto said terrain (21) of the future trajectory (23) of the aircraft (A).

13. The process as claimed in any one of claims 10 to 12, **characterized in that** the image (IM) constructed in step e) furthermore comprises a plurality of vertical strokes (31) between points (32) situated on said first plot (23) representing the future trajectory of the aircraft (A) and the corresponding vertical projections (33) of these points (32) onto said terrain (21).

14. The process as claimed in claim 13, **characterized in that** at least one of said vertical strokes (31) comprises a safety altitude indication.

15. The process as claimed in any one of claims 10 to 14, **characterized in that** the image (IM) constructed in step e) furthermore comprises a second symbol (28) situated at the intersection of said vertical reference stroke (22) and said representation (21) illustrating the terrain.

16. The process as claimed in any one of claims 10 to 15, **characterized in that** said vertical reference stroke (22) comprises a scale (29).

17. The process as claimed in any one of claims 10 to 16, **characterized in that** said vertical reference stroke (22) comprises a safety altitude indication.

18. The process as claimed in any one of claims 10 to 17, **characterized in that** the image (IM) constructed in step e) furthermore comprises a heading scale (34) represented above the horizon line (10).

19. The process as claimed in any one of claims 10 to 18, **characterized in that** the image (IM) constructed in step e) furthermore comprises a flight plan (38).

20. The process as claimed in any one of claims 10 to 19, **characterized in that** the image (IM) constructed in step e) furthermore comprises supplementary information (41, 27) .

21. The process as claimed in any one of claims 10 to 20, **characterized in that** said representation (21) illustrating the terrain is colored as a function of the discrepancy between the altitude of the aircraft (A) and the altitude of said terrain (21).

22. The process as claimed in any one of claims 10 to 21, **characterized in that** the image (IM) constructed in step e) furthermore comprises a grid which is associated with the representation (21) of the terrain and which corresponds to the vertical projection of the edges of the upper ends (25) of elementary cubes (24) onto a surface (26) forming said representation (21).

23. The process as claimed in any one of claims 10 to 22, **characterized in that** any risk of collision of the aircraft (A) with the terrain (21) is detected by calculating the distance between the future trajectory (23) of the aircraft (A) and said terrain (21), and a first alarm indication (45, 47) is presented on said image (IM) when such a risk of collision is detected.

24. The process as claimed in any one of claims 10 to 23, **characterized in that** any risk of intersection of a flight plan of the aircraft (A) with the terrain (21) is detected by calculating the distance between a trajectory (39) corresponding to this flight plan (38) of the aircraft (A) and said terrain (21), and a second alarm indication is presented on said image (IM) when such a risk of intersection is detected.

25. The process as claimed in any one of claims 10 to 24, **characterized in that** a rotation of the line of aim (LV) by a predetermined angle about the aircraft (A) is carried out.

26. A device for constructing a synthetic image of the environment of an aircraft (A) and presenting it to at least one pilot of said aircraft (A), said device (1) comprising:

   - information sources (2) comprising information relating to the aircraft (A) and to its environment;
   - information processing means (3) able to construct a synthetic image (IM) of the environment of the aircraft (A) on the basis of information emanating from said information sources (2); and
   - display means (5) able to present, on at least one part of a display screen (7), said synthetic image (IM),

   **characterized in that** said information processing means (3) are formed in such a way as to implement the process specified under any one of claims 1 to 25.

**Patentansprüche**

1. Verfahren zum Zusammenstellen eines Synthesebildes (IM) der Umgebung eines Luftfahrzeugs (A) und zum Präsentieren desselben vor mindestens einem Piloten des Luftfahrzeugs (A), **dadurch gekennzeichnet, dass**

   a) eine erste Gerade (D2) bestimmt wird, die durch den Standort des Luftfahrzeugs (A) geht und einen ersten seitlichen Abweichungswinkel α und einen ersten senkrechten Abweichungswinkel β zum Flugweg (DR) des Luftfahrzeugs (A) bildet;

b) ein erster Punkt (V) bestimmt wird, der sich auf der ersten Geraden (D2) am hinteren Teil des Luftfahrzeugs (A) in einem derartigen Abstand befindet, dass sich die senkrechte Projektion (V1) dieses ersten Punktes (V) auf der waagerechten Ebene, die durch den Standort des Luftfahrzeugs (A) geht, in einem vorherbestimmten Abstand L1 vom Standort des Luftfahrzeugs (A) befindet;

c) eine Visierlinie (LV) bestimmt wird, die durch den ersten Punkt (V) geht und einen zweiten seitlichen Abweichungswinkel va und einen zweiten senkrechten Abweichungswinkel vb mit einer zweiten Geraden (D3) bildet, die durch den ersten Punkt (V) geht und zu dem Flugweg (DR) des Luftfahrzeugs (A) parallel ist;

d) eine Projektionsebene (PP) definiert wird, die zur Visierlinie (LV) orthogonal ist;

e) ein Bild (IM) aus mindestens einem Teil der Umgebung mindestens am vorderen Teil des Luftfahrzeugs (A) anhand einer konischen Projektion auf die Projektionsebene (PP) unter Berücksichtigung des ersten Punktes (V) als Bezugspunkt der Projektion zusammengestellt wird;

f) das Bild (IM) seitlich durch zwei senkrechte Geraden (8, 9) begrenzt wird, die jeweils den Horizont (10) des Bildes (IM) an zweiten und dritten Punkten (11, 12) kreuzen, die derart vorliegen, dass einerseits der Winkel (θ1) zwischen der Visierlinie (LV) und einer dritten Geraden (13), die durch die ersten und zweiten Punkte (V, 11) geht, einem vorherbestimmten Winkel entspricht, und andererseits der Winkel (θ2) zwischen der Visierlinie (LV) und einer vierten Geraden (14), die durch die ersten und dritten Punkte (V, 12) geht, einem vorherbestimmten Winkel entspricht;

g) der Maßstab des derart abgegrenzten Bildes (IM) angepasst wird, damit die Strecke (15), die durch die zweiten und dritten Punkte (11, 12) gebildet wird und die Breite des Bildes (IM) definiert, mit der Breite eines Visualisierungsbildschirms (7) übereinstimmt, auf dem man das Bild (IM) präsentieren möchte, und dieses Bild (IM) in Abhängigkeit von der Höhe des Visualisierungsbildschirms (7) senkrecht begrenzt wird; und

h) das derart zusammengestellte Bild (IM), das ein Synthesebild darstellt, auf dem Visualisierungsbildschirm (7) präsentiert wird.

2. Verfahren nach Anspruch 1, **dadurch gekennzeichnet, dass** der erste seitliche Abweichungswinkel α zwischen 6° und 15° liegt.

3. Verfahren nach einem der Ansprüche 1 und 2, **dadurch gekennzeichnet, dass** der erste senkrechte Abweichungswinkel β zwischen 3° und 10° liegt.

4. Verfahren nach einem der Ansprüche 1 bis 3, **dadurch gekennzeichnet, dass** der vorherbestimmte Abstand L1 zwischen 3 und 20 Kilometern liegt.

5. Verfahren nach einem der Ansprüche 1 bis 4, **dadurch gekennzeichnet, dass** der zweite seitliche Abweichungswinkel va kleiner oder gleich dem ersten seitlichen Abweichungswinkel α ist.

6. Verfahren nach einem der Ansprüche 1 bis 5, **dadurch gekennzeichnet, dass** der zweite senkrechte Abweichungswinkel vb kleiner oder gleich dem ersten senkrechten Abweichungswinkel β ist.

7. Verfahren nach einem der vorhergehenden Ansprüche, **dadurch gekennzeichnet, dass** der Visualisierungsbildschirm (7) mit einer Kursskala (34) versehen ist und die Winkel (θ1, θ2) zwischen einerseits der Visierlinie (LV) und andererseits den dritten und vierten Geraden (13, 14) derart sind, dass die Winkelabweichung auf der Kursskala (34) zwischen den zweiten und dritten Punkten (11, 12) zwischen 40° und 140° liegt.

8. Verfahren nach einem der vorhergehenden Ansprüche, **dadurch gekennzeichnet, dass** in Schritt g) das Bild (IM) senkrecht begrenzt wird, so dass sich der Horizont (10) des Bildes (IM) im oberen Drittel des Visualisierungsbildschirms (7) befindet.

9. Verfahren nach einem der vorhergehenden Ansprüche, **dadurch gekennzeichnet, dass** in Schritt e) nur ein Bild der Umgebung, die sich bis auf einen vorherbestimmten Abstand am vorderen Teil des Luftfahrzeugs (A) befindet, zusammengestellt wird.

10. Verfahren nach einem der vorhergehenden Ansprüche, **dadurch gekennzeichnet, dass** das in Schritt e) zusammengestellte Bild (IM) mindestens folgende Elemente umfasst:

- ein erstes Symbol (20), welches das Luftfahrzeug (A) darstellt und seinen Standort angibt;
- eine Darstellung (21), die den Boden abbildet;
- einen senkrechten Bezugsstrich (22) zwischen dem Symbol (20) des Luftfahrzeugs (A) und seiner senkrechten Projektion (28) auf den Boden (21); und
- eine erste Spur (23), welche die zukünftige Flugbahn des Luftfahrzeugs (A) darstellt.

11. Verfahren nach Anspruch 10, **dadurch gekenn-**

**zeichnet, dass** das erste Symbol (20), welches das Luftfahrzeug (A) darstellt, für die Roll-, Nick- und Gierlagen des Luftfahrzeugs (A) repräsentativ ist.

12. Verfahren nach einem der Ansprüche 10 und 11, **dadurch gekennzeichnet, dass** das in Schritte e) zusammengestellte Bild (IM) zudem eine zweite Spur (30) umfasst, welche die senkrechte Projektion der zukünftigen Flugbahn (23) des Luftfahrzeugs (A) auf dem Boden (21) darstellt.

13. Verfahren nach einem der Ansprüche 10 bis 12, **dadurch gekennzeichnet, dass** das in Schritt e) zusammengestellte Bild (IM) zudem eine Vielzahl von senkrechten Strichen (31) zwischen Punkten (32) umfasst, die sich auf der ersten Spur (23) befinden, welche die zukünftige Flugbahn des Luftfahrzeugs (A) und die entsprechenden senkrechten Projektionen (33) dieser Punkte (32) auf dem Boden (21) darstellt.

14. Verfahren nach Anspruch 13, **dadurch gekennzeichnet, dass** mindestens einer der senkrechten Striche (31) eine Sicherheitshöhenangabe umfasst.

15. Verfahren nach einem der Ansprüche 10 bis 14, **dadurch gekennzeichnet, dass** das in Schritt e) zusammengestellte Bild (IM) zudem ein zweites Symbol (28) umfasst, das sich am Schnittpunkt des senkrechten Bezugsstriches (22) und der den Boden abbildenden Darstellung (21) befindet.

16. Verfahren nach einem der Ansprüche 10 bis 15, **dadurch gekennzeichnet, dass** der senkrechte Bezugsstrich (22) eine Skala (29) umfasst.

17. Verfahren nach einem der Ansprüche 10 bis 16, **dadurch gekennzeichnet, dass** der senkrechte Bezugsstrich (22) eine Sicherheitshöhenangabe umfasst.

18. Verfahren nach einem der Ansprüche 10 bis 17, **dadurch gekennzeichnet, dass** das in Schritt e) zusammengestellte Bild (IM) zudem einen Kursskala (34) umfasst, der oberhalb des Horizonts (10) dargestellt ist.

19. Verfahren nach einem der Ansprüche 10 bis 18, **dadurch gekennzeichnet, dass** das in Schritt e) zusammengestellte Bild (IM) zudem einen Flugplan (38) umfasst.

20. Verfahren nach einem der Ansprüche 10 bis 19, **dadurch gekennzeichnet, dass** das in Schritt e) zusammengestellte Bild (IM) zudem zusätzliche Informationen (41, 27) umfasst.

21. Verfahren nach einem der Ansprüche 10 bis 20, **dadurch gekennzeichnet, dass** die Darstellung (21), die den Boden abbildet, in Abhängigkeit von dem Abstand zwischen der Höhe des Luftfahrzeugs (A) und der Höhe des Bodens (21) gefärbt ist.

22. Verfahren nach einem der Ansprüche 10 bis 21, **dadurch gekennzeichnet, dass** das in Schritt e) zusammengestellte Bild (IM) zudem ein Raster umfasst, das mit der Darstellung (21) des Bodens verknüpft ist und das der senkrechten Projektion der Schnittlinien der oberen Enden (25) von Elementarwürfeln (24) auf einer Oberfläche (26) entspricht, welche die Darstellung (21) bildet.

23. Verfahren nach einem der Ansprüche 10 bis 22, **dadurch gekennzeichnet, dass** jegliches Kollisionsrisiko des Luftfahrzeugs (A) mit dem Boden (21) erfasst wird, indem der Abstand zwischen der zukünftigen Flugbahn (23) des Luftfahrzeugs (A) und dem Boden (21) berechnet wird, und eine erste Alarmangabe (45, 47) auf dem Bild (IM) präsentiert wird, wenn ein derartiges Kollisionsrisiko erfasst wird.

24. Verfahren nach einem der Ansprüche 10 bis 23, **dadurch gekennzeichnet, dass** jegliches Risiko, dass ein Flugplan des Luftfahrzeugs (A) den Boden (21) kreuzt, erfasst wird, indem der Abstand zwischen einer Flugbahn (39), die diesem Flugplan (38) des Luftfahrzeugs (A) entspricht, und dem Boden (21) berechnet wird, und eine zweite Alarmangabe auf dem Bild (IM) präsentiert wird, wenn ein derartiges Kreuzungsrisiko erfasst wird.

25. Verfahren nach einem der Ansprüche 10 bis 24, **dadurch gekennzeichnet, dass** eine Drehung der Visierlinie (LV) um einen vorherbestimmten Winkel um das Luftfahrzeug (A) herum vorgenommen wird.

26. Vorrichtung zum Zusammenstellen eines Synthesebildes der Umgebung eines Luftfahrzeugs (A) und zum Präsentieren des Bildes vor mindestens einem Piloten des Luftfahrzeugs (A), wobei die Vorrichtung (1) Folgendes umfasst:

- Informationsquellen (2), die Informationen über das Luftfahrzeug (A) und seine Umgebung enthalten;
- Informationsverarbeitungsmittel (3), die in der Lage sind, ein Synthesebild (IM) der Umgebung des Luftfahrzeugs (A) aus Informationen, die aus den Informationsquellen (2) stammen, zusammenzustellen; und
- Anzeigemittel (5), die in der Lage sind, auf mindestens einem Teil eines Visualisierungsbildschirms (7) das Synthesebild (IM) zu präsentieren,

**dadurch gekennzeichnet, dass** die Informationsverarbeitungsmittel (3) derart gebildet sind, dass sie das Verfahren umsetzen, das in einem der Ansprüche 1 bis 25 vorgegeben ist.

Fig. 1

Fig. 2

Fig. 3

Fig. 4

Fig. 5

Fig. 6

Fig. 7

Fig. 11

Fig. 8

Fig. 9

FIG. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5781146 A